# EUROPÄISCHE PATENTSCHRIFT

(11) **EP 0 500 887 B1**
(45) Veröffentlichungstag und Bekanntmachung des Hinweises auf die Patenterteilung: **12.07.1995**
(21) Anmeldenummer: 91916267.7
(22) Anmeldetag: 12.09.1991
(51) Int. Cl.: G08G 5/04, B64D 47/06

(54) **VERFAHREN UND EINRICHTUNG ZUR VERMEIDUNG VON FLUGZEUGKOLLISIONEN**
PROCESS AND DEVICE TO PREVENT AIRCRAFT COLLISIONS
PROCEDE ET DISPOSITIF POUR EVITER LES COLLISIONS D'AVIONS

(30) Priorität: 14.09.1990 DE 4029204
(43) Veröffentlichungstag der Anmeldung: 02.09.1992
(73) Patentinhaber: Hella KG Hueck & Co., 59552 Lippstadt (DE)
(72) Erfinder: SCHULTE, Peter, D-5760 Arnsberg 24 (DE); SCHMEES, Siegfried, D-4787 Geseke (DE)
(86) Internationale Anmeldenummer: EP9101733
(87) Internationale Veröffentlichungsnummer: WO9205529

(56) Entgegenhaltungen:
- GB-A- 2 214 367
- US-A- 3 903 501

## Beschreibung

Die Erfindung betrifft ein Verfahren zur Vermeidung von Flugzeugkollisionen, bei dem von einer Lichtblitzwarneinrichtung am Flugzeug, die mindestens eine Lichtquelle aufweist, in periodischen Abständen Lichtblitze erzeugt werden, und eine Einrichtung zur Vermeidung von Flugzeugkollisionen, mit einer Lichtblitzwarneinrichtung an dem Flugzeug, die mindestens eine Lichtquelle aufweist und die in periodischen Abständen Lichtblitze erzeugt.

Mit der Zunahme des Flugverkehrs in allen Bereichen häufen sich die Vorfälle, bei denen sich Flugzeuge derart annähern, daß Kollisionen drohen. Um fremde Flugzeuge vor der Annäherung zu warnen, werden Lichtblitzwarneinrichtungen an den Flugzeugen eingesetzt, die mindestens eine Lichtquelle aufweisen, und die in periodischen Abständen Lichtblitze erzeugen. Die Lichtblitze erhöhen dabei die Erkennbarkeit von sich nähernden Flugzeugen, wodurch frühzeitig Kurskorrekturen eingeleitet werden können, um Flugzeugkollisionen zu vermeiden.

Bei den bisher verwendeten Einrichtungen und Verfahren zur Vermeidung von Flugzeugkollisionen, bei denen Lichtblitzwarneinrichtungen eingesetzt werden, erweist sich jedoch als nachteilig, daß die Lichtblitze nur in periodischen Abständen, das heißt, mit einer konstanten Frequenz erzeugt werden, wodurch diese Lichtblitzwarneinrichtungen nur eine geringe Aufmerksamkeit anderer Piloten auf sich ziehen, was die Warnwirksamkeit solcher Lichtblitzwarneinrichtungen herabsetzt und zu einer nicht ausreichenden Sicherheit bei dem Betrieb des Flugzeugs, insbesondere in dem Bereich von Ballungsgebieten, führt.

Aus der US-PS 3 903 501 ist eine Einrichtung dieser Art bekannt. Hierbei werden in periodischen Abständen Lichtblitze erzeugt. Zur Erhöhung der Warnwirksamkeit sendet eine Lichtquelle Lichtblitze aus, die zeitlich zu den anderen Lichtblitzen um einen festen Betrag verschoben sind. Auch hierbei erweist sich als nachteilig, daß sich ein Gewöhnungseffekt einstellt.

Der Erfindung liegt daher die Aufgabe zugrunde, ein Verfahren und eine Einrichtung zur Vermeidung von Flugzeugkollisionen zu schaffen, bei denen die Warnwirksamkeit, die Ortbarkeit und damit die Sicherheit bei dem Betrieb von Flugzeugen erhöht wird.

Die Aufgabe wird durch das Verfahren nach Anspruch 1 erfindungsgemäß dadurch gelöst, daß von einer ersten Lichtquelle Lichtblitze mit einer konstanten Frequenz ausgesendet werden und daß von einer zweiten Lichtquelle Lichtblitze mit einer variablen Frequenz ausgesendet werden.

Es ist von Vorteil, daß von einer ersten Lichtquelle Lichtblitze mit einer konstanten Frequenz ausgesendet werden und daß von einer zweiten Lichtquelle Lichtblitze mit einer variablen Frequenz ausgesendet werden, weil somit auf einfache und kostengünstige Weise zwei Lichtblitze ausgesendet werden, deren zeitlicher Abstand ständig variiert, wodurch ein Gewöhnungseffekt ausgeschlossen wird, die Aufmerksamkeit fremder Piloten erhöht wird, insofern auch die Warnwirksamkeit erhöht wird, was dazu beiträgt, die Sicherheit bei dem Betrieb von Flugzeugen erheblich zu steigern. Weiterhin erweist sich hier als vorteilhaft, daß aufgrund dieser ausgesandten Lichtblitze mit unterschiedlicher sich variierender Zeitfolge die Ortbarkeit eines sich annähernden Flugobjektes verbessert wird, wodurch die auszuführende Kurskorrektur einfacher, schneller und mit der richtigen Richtung ausgeführt werden kann.

Die gleichen Vorteile ergeben sich bei der Lösung der Aufgabe durch die kennzeichnenden Merkmale der erfindungsgemäßen Einrichtung nach Anspruch 10, wobei die mindestens eine Steuereinrichtung über eine erste Zündeinrichtung mit einer ersten Lichtquelle verbunden ist, die mit einer konstanten Frequenz Lichtblitze aussendet und die mindestens eine Steuereinrichtung über eine zweite Zündeinrichtung mit einer zweiten Lichtquelle verbunden ist, die mit einer variablen Frequenz Lichtblitze aussendet.

Es ist von Vorteil, daß die variable Frequenz durch eine periodische oder aperiodische Funktion bestimmt ist, die der konstanten Frequenz in der Phase periodisch oder aperiodisch vor- und nacheilt, weil somit auf einfache und kostengünstige Weise sichergestellt wird, daß der zeitliche Abstand der Blitzfolge ständig variiert, so daß Gewöhnungseffekte auszuschließen sind und die Warnwirksamkeit eines Verfahrens zum Betreiben einer Lichtblitzwarneinrichtung erhöht wird, was die Sicherheit bei dem Betrieb von Flugzeugen heraufsetzt.

Die Verwendung einer aperiodischen Funktion bietet den Vorteil, daß ein Gewöhnungseffekt in jedem Fall auszuschließen ist.

Es ist besonders vorteilhaft, wenn die Funktion eine sinusähnliche Funktion oder eine Sinusfunktion ist, weil bei Funktionen dieser Art, über den periodischen Funktionsablauf der Abstand der Lichtblitze sehr groß ist und zudem sehr unterschiedliche Steigungen der Funktion vorliegen, so daß die Warnwirksamkeit weiter heraufgesetzt wird.

Dadurch, daß die Funktion derart festgelegt ist, daß die Auflösungsgrenze für zwei zu unterschiedlichen Zeiten aufblitzende Lichtquellen möglichst lange überschritten wird und daß die Funktion eine möglichst variable Steigung aufweist, ergibt sich der Vorteil, daß neben einer besonders guten Ortbarkeit eines sich annähernden Flugzeuges die Warnwirksamkeit erhöht wird, da bei nur geringen zeitlichen Abständen zwischen zwei folgenden Lichtblitzen diese nicht mehr als zwei Lichtblitze, sondern nur noch als ein Lichtblitz erkannt werden können. Liegen die Lichtblitze also in einem zeitlichen Abstand, der oberhalb dieser Auflösungsgrenze liegt, die etwa größer gleich +/- 40 Millisekunden beträgt, und weist die Funktion zudem noch eine möglichst variable Steigung auf, so wird neben einer sehr guten Ortbarkeit eines sich annähernden Flugzeugs eine sehr hohe Warnwirksamkeit erreicht.

Dies kann dadurch noch gesteigert werden, daß die Funktion nur Blitze außerhalb der Auflösungsgrenze erzeugt.

Es ist von Vorteil, daß die Funktion eine Zufallsfunktion ist, weil somit sichergestellt wird, daß ein Gewöhnungseffekt bei der Betrachtung von Lichtblitzen nicht eintreten kann.

Dadurch, daß die von der ersten Lichtquelle ausgesendeten Lichtblitze auch eine variable Frequenz aufweisen, daß diese variable Frequenz durch eine periodische oder aperiodische Funktion bestimmt ist und daß bei dem Funktionsablauf ein maximaler Phasenunterschied zwischen den Funktionen vorliegt, ergibt sich der Vorteil, daß zum einen die Lichtblitze einen größeren Zeitabstand aufweisen können und zum anderen sichergestellt wird, daß eine sehr gute Ortbarkeit erreicht wird, wodurch die Warnwirksamkeit des Verfahrens erhöht wird und die Sicherheit bei dem Betrieb von Flugzeugen heraufgesetzt wird.

Es ist von Vorteil, daß das Verfahren automatisch durch ein Radarsystem am Flugzeug bei Kollisionsgefahr aktiviert und wieder deaktiviert wird, weil somit auf einfache und kostengünstige Weise bei Annäherung eines fremden Flugobjektes das Verfahren eingeschaltet wird, wodurch das sich nähernde Flugobjekt wirkungsvoll gewarnt wird und das Verfahren wieder deaktiviert wird, sobald sich kein fremdes Flugobjekt mehr in einem vorgegebenen Bereich um das Flugzeug herum befindet, wodurch die Sicherheit bei dem Betrieb des Flugzeugs erheblich gesteigert werden kann und das Verfahren nur dann zur Anwendung kommt, wenn es erforderlich ist, wodurch auch ein Gewöhnungseffekt ausschlienbar ist.

Es ist besonders vorteilhaft, daß das Verfahren in der Start- und Landephase einschaltbar ist, weil somit wirkungsvoll das Auftreten von Vogelschlag verhindert werden kann, da Vögel auf die in unterschiedlichem Zeitabstand mit variabler Frequenz blitzenden Lichtquellen derart reagieren, daß sie den Flugbereich verlassen, wodurch die Sicherheit bei dem Betrieb von Flugzeugen auch in der Start- und Landephase bei Verwendung des Verfahrens erheblich erhöht werden kann.

Dadurch, daß die mindestens eine Steuereinrichtung einen Taktgenerator aufweist, der die konstante Frequenz bestimmt und/oder daß die mindestens eine Steuereinrichtung einen Funktionsgenerator oder einen Zufallsgenerator oder einen Programmspeicher aufweist, der die variable Frequenz und/oder die konstante Frequenz bestimmt, ergibt sich der Vorteil, daß auf besonders einfache und kostengünstige Weise jede Funktion erzeugbar ist, die geeignet ist, eine Blitzfolge zu erzeugen, die eine hohe Warnwirksamkeit, eine hohe Ortbarke t und damit eine hohe Steigerung der Sicherheit bei dem Betrieb von Flugzeugen zur Folge hat.

In diesem Zusammenhang erweist sich als Vorteil, daß der Funktionsgenerator ein Sinusgenerator ist, weil somit eine besonders einfache und kostengünstige Einrichtung geschaffen wird, die zudem aufgrund der Eigenschaften der Sinusfunktion eine sehr hohe Warnwirksamkeit aufweist, da die Sinusfunktion sicherstellt, daß zum einen eine ständig sich ändernde Steigung der Funktion vorliegt und zum anderen eine sehr große Anzahl der Blitzfolgen einen zeitlichen Abstand hat, der oberhalb der Auflösungsgrenze für zwei aufeinanderfolgende Lichtblitze liegt.

Dadurch, daß die Lichtblitzwarnanlage mit einem Radarsystem am Flugzeug verbunden ist, daß die Lichtblitzwarneinrichtung automatisch bei Kollisionsgefahr aktiviert und wieder deaktiviert wird, ergibt sich der Vorteil, daß die Einrichtung automatisch eingeschaltet wird, sobald sich ein fremdes Flugobjekt bis auf eine bestimmte Entfernung dem Flugzeug nähert und wieder ausgeschaltet wird, sobald sich kein Flugobjekt mehr in einem vorgegebenen Bereich um das Flugzeug herum befindet, wodurch zum einen die Sicherheit bei dem Betrieb von Flugzeugen erhöht wird und zum anderen die Einrichtung nur dann eingeschaltet ist, wenn die Einschaltung auch erforderlich ist, was zum einen Gewöhnungseffekte ausschließt und zum anderen die Lebensdauer der Bauelemente erhöht.

Es ist von Vorteil, daß die Lichtblitzwarneinrichtung in der Start- und Landephase einschaltbar ist, weil somit sehr wirkungsvoll das Auftreten von Vogelschlag, insbesondere in der Start- und Landephase, vermieden wird, da Vögel auf die durch die Einrichtung erzeugte Blitzfolge derart reagieren, daß sie den Bereich des Flugzeugs verlassen.

Ein Ausführungsbeispiel der Erfindung ist in den Zeichnungen dargestellt und wird im folgenden anhand der Zeichnungen näher erläutert.

Es zeigen
Figur 1 ein vereinfachtes Blockschaltbild einer erfindungsgemäßen Einrichtung,
Figur 2 ein Diagramm, das beispielhaft den Phasenunterschied der beiden Blitze in Abhängigkeit von der Zeit darstellt.

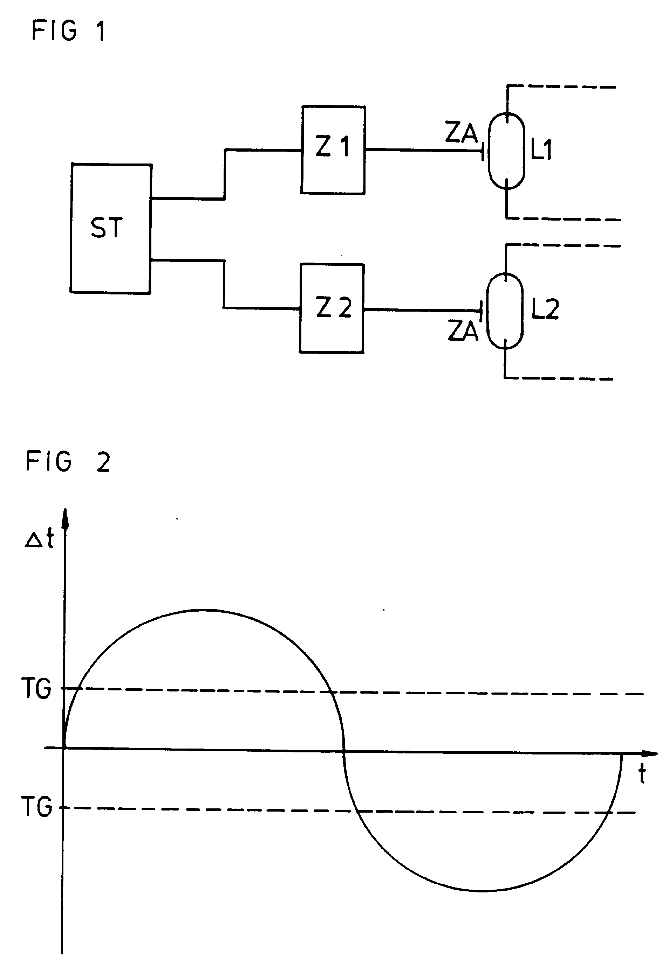

In Figur 1 ist beispielhaft ein Blockschaltbild einer Einrichtung zur Vermeidung von Flugzeugkollisionen dargestellt, die eine Steuereinrichtung (ST) aufweist. Die Spannungsversorgung der Steuereinrichtung (ST) ist hier nicht gezeigt. Die Steuereinrichtung (ST) weist hier beispielhaft zwei Ausgänge auf, wobei ein erster Ausgang elektrisch leitend mit einer ersten Zündeinrichtung (Z1) und ein zweiter Ausgang elektrisch leitend mit einer zweiten Zündeinrichtung (Z2) verbunden ist. Die erste Zündeinrichtung (Z1) ist mit einer Zündanode (ZA) einer ersten Lichtquelle (L1) verbunden. Die zweite Zündeinrichtung (Z2) ist mit einer Zündanode (ZA) einer zweiten Lichtquelle (L2) verbunden. Die Lichtquellen (L1, L2) sind hier beispielhaft als Entladungslampen ausgebildet und erzeugen aufgrund der Signale von der ersten Zündeinrichtung (Z1) und der zweiten Zündeinrichtung (Z2) Lichtblitze. Die Versorgungseinrichtungen für die Lichtquellen (L1, L2) sind hier nicht dargestellt. Jede Lichtquelle (L1, L2) kann dabei eine gesonderte Versorgungseinrichtung aufweisen. Beide Lichtquellen (L1, L2) können jedoch auch an nur eine Versorgungseinrichtung angeschlossen sein.

Bei einem anderen Ausführungsbeispiel können zur Erhöhung der Systemsicherheit der ersten Zündeinrichtung (Z1) und der zweiten Zündeinrichtung (Z2) jeweils getrennte Steuereinrichtungen (ST) zugeordnet sein, die zur Synchronisation der zu erzeugenden Lichtblitze miteinander verbunden sein können.

Die mindestens eine Steuereinrichtung weist dabei einen Taktgenerator auf, der eine konstante Frequenz zur Erzeugung von Lichtblitzen bestimmt. Diese Lichtblitze konstanter Frequenz können z. B. durch die erste Lichtquelle (L1) ausgesendet werden. Weiterhin weist die mindestens eine Steuereinrichtung (ST) einen Funktionsgenerator oder einen Zufallsgenerator oder einen Programmspeicher auf, der eine variable Frequenz für die Erzeugung von Lichtblitzen in unterschiedlichen Abständen bestimmt. Diese Lichtblitze werden hier beispielhaft von der zweiten Lichtquelle (L2) ausgesendet.

Bei einem anderen Ausführungsbeispiel können auch weitere Lichtquellen von der mindestens einen Steuereinrichtung (ST) angesteuert werden. Zudem ist es möglich, aus nur einem Funktions- und/oder Taktgenerator alle Steuersignale abzuleiten. Als besonders einfach, kostengünstig und wirkungsvoll hat es sich erwiesen, wenn der Funktionsgenerator ein Sinusgenerator ist, da hierbei eine besonders hohe Warnwirksamkeit bei geringen Baukosten erreicht wird.

Die gesamte in ihrer Vollständigkeit hier nicht gezeigte Einrichtung kann dabei über eine geeignete Schnittstelle mit einem flugzeuginternen Radarsystem verbunden sein, daß Flugobjekte in einem bestimmten Bereich um das Flugzeug herum erkennt und die Einrichtung automatisch bei Kollisionsgefahr aktiviert und wieder deaktiviert, wenn kein fremdes Flugobjekt sich in dem vorgegebenen Bereich um das Flugzeug herum befindet.

Zudem kann die Einrichtung in der Start- und Landephase manuell oder automatisch einschaltbar sein, um zur Verhütung von Vogelschlag zu dienen.

In Figur 2 ist ein Diagramm dargestellt, das die Phasenverschiebung (Δt) als Zeit in Abhängigkeit von der Zeit (t) darstellt. Während die erste Lichtquelle (L1), hier beispielhaft mit konstanter Frequenz Lichtblitze aussendet, sendet die zweite Lichtquelle (L2), angesteuert durch die mindestens eine Steuereinrichtung (ST), Lichtblitze mit variabler Frequenz aus. Beispielhaft wurde hier eine periodische Funktion gewählt, die sinusähnlich ist. Grundsätzlich sind aber auch alle periodischen oder aperiodischen Funktionen geeignet, die Warnwirksamkeit der Einrichtung zu erhöhen. Eine besonders einfache Realisation ergibt sich bei der Verwendung einer Sinusfunktion. Wie dem Diagramm zu entnehmen ist, eilt die periodische Funktion, die hier beispielhaft gewählt wurde, in der Frequenz der konstanten Frequenz vor und nach. Dabei ist es vorteilhaft, um Gewöhnungseffekte auszuschließen, daß die Steigung der Funktion möglichst variabel ist, um die Warnwirksamkeit zu erhöhen. Zudem ist es wichtig, daß der zeitliche Abstand von zwei aufeinanderfolgenden Blitzen außerhalb eines Zeitgrenzbereiches (TG) liegt, der die Auflösungsgrenze für zwei aufeinanderfolgende Lichtblitze für das menschliche Wahrnehmungsvermögen vorgibt. Je weniger Lichtblitze mit einem Abstand ausgesendet werden, die in dem Zeitgrenzbereich (TG) liegen, umso höher ist die Warnwirksamkeit, die Ortbarkeit und damit die Sicherheit bei dem Betrieb von Flugzeugen. Bei der Verwendung einer Zufallsfunktion oder aber auch bei einer beliebig programmierten Funktion ist es daher vorteilhaft, nur solche Funktionswerte zu verwenden, die außerhalb des Zeitbereichs (TG) liegen.

Eine Erhöhung der Ortbarkeit und der Warnwirksamkeit kann zudem erreicht werden, wenn sowohl die erste Lichtquelle (L1) als auch die zweite Lichtquelle (L2) Lichtblitze mit variabler Frequenz aussenden, wobei die Frequenzen durch periodische oder aperiodische Funktionen bestimmt sein können und der Phasenunterschied, das heißt hier, die Zeit (Δ t) bei dem Funktionsablauf zwischen den Funktionen maximal ist.

Diese so erzeugten Lichtblitzfolgen eignen sich insbesondere auch zur Verhütung von Vogelschlag während der Start- und Landephase von Flugzeugen.

## Patentansprüche

1. Verfahren zur Vermeidung von Flugzeugkollisionen, bei dem von einer Lichtblitzwarneinrichtung am Flugzeug, die mindestens eine Lichtquelle aufweist in periodischen Abständen Lichtblitze erzeugt werden, dadurch gekennzeichnet, daß von einer ersten Lichtquelle Lichtblitze mit einer konstanten Frequenz ausgesendet werden und daß von einer zweiten Lichtquelle Lichtblitze mit einer variablen Frequenz ausgesendet werden.

2. Verfahren nach Anspruch 1, dadurch gekennzeichnet, daß die variable Frequenz durch eine periodische oder aperiodische Funktion bestimmt ist, die der konstanten Frequenz in der Phase periodisch oder aperiodisch vor- und nacheilt.

3. Verfahren nach Anspruch 2, dadurch gekennzeichnet, daß die Funktion eine sinusähnliche Funktion oder eine Sinusfunktion ist.

4. Verfahren nach Anspruch 2, dadurch gekennzeichnet, daß die Funktion derart festgelegt ist, daß die Auflösungsgrenze für zwei zu unterschiedlichen Zeiten aufblitzende Lichtquellen möglichst lange überschritten wird und daß die Funktion eine möglichst variable Steigung aufweist.

5. Verfahren nach Anspruch 4, dadurch gekennzeichnet, daß die Funktion nur Blitze außerhalb der Auflösungsgrenze erzeugt.

6. Verfahren nach Anspruch 5, dadurch gekennzeichnet, daß die Funktion eine Zufallsfunktion ist.

7. Verfahren nach Anspruch 2, dadurch gekennzeichnet, daß die von der ersten Lichtquelle ausgesendeten Lichtblitze auch eine variable Frequenz aufweisen, daß diese variable Frequenz durch eine periodische oder aperiodische Funktion bestimmt ist, und daß bei dem Funktionsablauf ein maximaler Phasenunterschied zwischen den Funktionen vorliegt.

8. Verfahren nach Anspruch 2, dadurch gekennzeichnet, daß das Verfahren automatisch durch ein Radarsystem am Flugzeug bei Kollisionsgefahr aktiviert und wieder deaktiviert wird.

9. Verfahren nach Anspruch 2, dadurch gekennzeichnet, daß das Verfahren in der Start- und Landephase einschaltbar ist.

10. Einrichtung zur Vermeidung von Flugzeugkollisionen, mit einer Lichtblitzwarneinrichtung an dem Flugzeug, die mindestens eine Lichtquelle aufweist und die in periodischen Abständen Lichtblitze erzeugt, dadurch gekennzeichnet, daß die Lichtblitzwarnanlage mindestens eine Steuereinrichtung (ST) aufweist, daß die mindestens eine Steuereinrichtung (ST) über eine erste Zündeinrichtung (Z1) mit einer ersten Lichtquelle (L1) verbunden ist, die mit einer konstanten Frequenz Lichtblitze aussendet und daß die mindestens eine Steuereinrichtung (ST) über eine zweite Zündeinrichtung (Z2) mit einer zweiten Lichtquelle (L2) verbunden ist, die mit einer variablen Frequenz Lichtblitze aussendet.

11. Einrichtung nach Anspruch 10, dadurch gekennzeichnet, daß die mindestens eine Steuereinrichtung (ST) einen Taktgenerator aufweist, der die konstante Frequenz bestimmt und/oder daß die mindestens eine Steuereinrichtung einen Funktionsgenerator oder einen Zufallsgenerator oder einen Programmspeicher aufweist, der die variable Frequenz und/oder die konstante Frequenz bestimmt.

## Claims

1. A process for avoiding aircraft collisions, in which periodically spaced light flashes are generated by a light flashing warning device on the aircraft, comprising at least one light source, **characterized in that** light flashes are emitted at a constant frequency by a first light source, and light flashes of a variable frequency are emitted by a second light source.

2. A process according to claim 1, **characterized in that** the variable frequency is set by a periodic or aperiodic function which is in phase periodically or aperiodically ahead or behind the constant frequency.

3. A process according to claim 2, **characterized in that** the function is a sine-like or a sine function.

4. A process according to claim 2, **characterized in that** the function is set in such a manner that the resolution limit for two light sources which flash at different times is exceeded as long as possible and that the function offers an as variable as possible rise.

5. A process according to claim 4, **characterized in that** the function only generates flashes outside the resolution limit.

6. A process according to claim 5, **characterized in that** the function is a random function.

7. A process according to claim 2, **characterized in that** light flashes emitted by the first light source are also of variable frequency, that this variable frequency is set by a periodic or aperiodic function, and that there is a maximum phase difference between the functions during the course of a functions.

8. A process according to claim 2, **characterized in that** the process is automatically activated by a radar system of the aircraft in the event of danger of collision and then deactivated.

9. A process according to claim 2, **characterized in that** the process is switched on during the take-off and landing phase.

10. A device for avoiding aircraft collisions, comprising a light flashing warning device on the aircraft with at least one light source, which generates periodically spaced light flashes, **characterized in that** the light flashing warning device comprises at least one control device (ST), that the at least one control device (ST) is connected via a first ignition device (Z1) to a first light source (L1) which emits light flashes at a constant frequency, and that the at least one control device (ST) is connected via a second ignition device (Z2) to a second light source (L2) which emits light flashes at a variable frequency.

11. A device according to claim 10, **characterized in that** the at least one control device (ST) comprises a pulse generator which sets the constant frequency and/or that the at least one control device comprises an operational generator or a random generator or a program store which sets the variable frequency and/or the constant frequency.

## Revendications

1. Procédé pour éviter les collisions d'avions, selon lequel un dispositif d'avertissement à éclat, prévu sur l'avion et comportant au moins une source lumineuse, génère des éclairs lumineux ou éclats à intervalles périodiques, caractérisé en ce qu'une première source lumineuse émet des éclats à une fréquence constante et qu'une seconde source lumineuse émet des éclats à une fréquence variable.

2. Procédé selon la revendication 1, caractérisé en ce que la fréquence variable est déterminée par une fonction périodique ou apériodique qui avance ou retarde de façon périodique ou apériodique en phase par rapport à la fréquence constante.

3. Procédé selon la revendication 2, caractérisé en ce que la fonction est semblable à une fonction sinus ou est une fonction sinus.

4. Procédé selon la revendication 2, caractérisé en ce que la fonction est fixée de manière que la limite de résolution pour deux sources lumineuses délivrant des éclats à des moments différents soit dépassée aussi longtemps que possible et que la fonction présente une pente aussi variable que possible.

5. Procédé selon la revendication 4, caractérisé en ce que la fonction génère seulement des éclats en dehors de la limite de résolution.

6. Procédé selon la revendication 5, caractérisé en ce que la fonction est une fonction aléatoire.

7. Procédé selon la revendication 2, caractérisé en ce que les éclats émis par la première source lumineuse présentent également une fréquence variable, que cette fréquence variable est déterminée par une fonction périodique ou apériodique et que, pendant le processus d'émission d'éclats, une différence de phase maximale existe entre les fonctions.

8. Procédé selon la revendication 2, caractérisé en ce que le processus d'émission d'éclats selon le procédé est activé automatiquement en cas de danger de collision par un système radar prévu à bord de l'avion et est ensuite désactivé de nouveau.

9. Procédé selon la revendication 2, caractérisé en ce que le processus d'émission d'éclats selon le procédé est enclenchable dans les phases de décollage et d'atterrisage.

10. Dispositif pour éviter les collisions d'avions, comprenant un dispositif d'avertissement à éclat prévu sur l'avion, comportant au moins une source lumineuse et générant des éclats lumineux à intervalles périodiques, caractérisé en ce que l'installation d'avertissement à éclat possède au moins un dispositif de commande (ST), que ce dispositif de commande (ST) ou l'un au moins de plusieurs dispositifs de commande (ST) est relié à travers un premier dispositif d'allumage (Z1) à une première source lumineuse (L1) qui émet des éclats lumineux à une fréquence constante, et que le dispositif de commande (ST) ou l'un au moins de plusieurs dispositifs de commande (ST) est relié à travers un second dispositif d'allumage (Z2) à une seconde source lumineuse (L2) qui émet des éclats à une fréquence variable.

11. Dispositif selon la revendication 10, caractérisé en ce que le dispositif de commande (ST) comporte un générateur de rythme qui détermine la fréquence constante et/ou que le dispositif de commande possède un générateur de fonctions, un générateur aléatoire ou une mémoire de programmes qui détermine la fréquence variable et/ou la fréquence constante.
